(19) Europäisches Patentamt
European Patent Office
Office européen des brevets

(11) EP 0 661 332 B1

(12) **EUROPEAN PATENT SPECIFICATION**

(45) Date of publication and mention of the grant of the patent:
**12.04.2000 Bulletin 2000/15**

(51) Int. Cl.[7]: **C08G 77/60**, C08L 83/16, C08L 83/10

(21) Application number: **94120834.0**

(22) Date of filing: **28.12.1994**

(54) **Silicon-containing reactive polymer and curable resin composition comprising the same**

Hartbäres Silizium-enthaltendes Polymer und härtbare Zusammensetzung auf Basis dieses Polymeres

Polymère réactif contenant du silicium et composition durcissable contenant ce polymère

(84) Designated Contracting States:
**DE FR GB**

(30) Priority: **28.12.1993 JP 35512793**
**28.12.1993 JP 35512593**

(43) Date of publication of application:
**05.07.1995 Bulletin 1995/27**

(73) Proprietor:
**Kanegafuchi Chemical Industry Co., Ltd.**
**Kita-ku Osaka-shi Osaka-fu (JP)**

(72) Inventors:
- **Iwahara, Takahisa**
**Kobe-shi, Hyogo-ken (JP)**
- **Kotani, Jun,**
**c/o Sansei-so**
**Kobe-shi, Hyogo-ken (JP)**
- **Tsumura, Manabu,**
**c/o Sansei-so**
**Kobe-shi, Hyogo-ken (JP)**
- **Hirose, Toshifumi**
**Kobe-shi, Hyogo-ken (JP)**

(74) Representative:
**Hansen, Bernd, Dr. Dipl.-Chem. et al**
**Hoffmann Eitle,**
**Patent- und Rechtsanwälte,**
**Arabellastrasse 4**
**81925 München (DE)**

(56) References cited:
**EP-A- 0 510 655** **FR-A- 2 595 363**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 661 332 B1

## Description

BACKGROUND OF THE INVENTION

Field of the Invention

The present invention relates to a silicon-containing reactive polymer and a curable resin composition comprising the same.

Description of the Related Art

As one of synthesis methods of silicon-containing polymers, hydrosilylation polymerization has been investigated. For example, a silicon-containing polymer prepared by the reaction according to the following reaction formula:

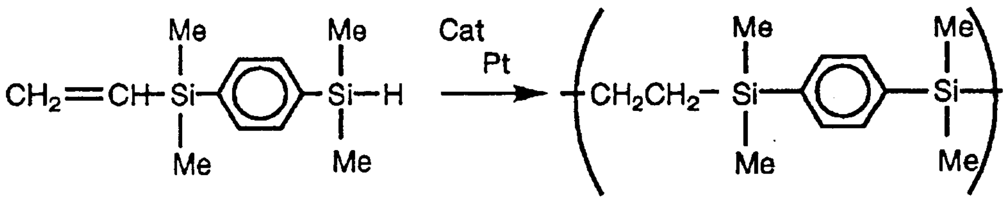


has high crystallinity and is excellent in heat resistance, since it comprises a 1,4-bis(dimethylsilylphenylene) unit having a good symmetry. However, it has some drawbacks that it has very poor solubility in solvents, that it has low processability when it is used in the form of a coating, a film, a fiber or a bulk or when it is used as a matrix resin of a complex material, and further that its properry cannot be improved by crosslinking since it cannot be mixed homogeneously with a crosslinking agent when it is crosslinked using its terminal functional groups.

A silicon-containing polymer having a methyl group and a phenyl group on one silicon atom is prepared according to the following reaction formula:

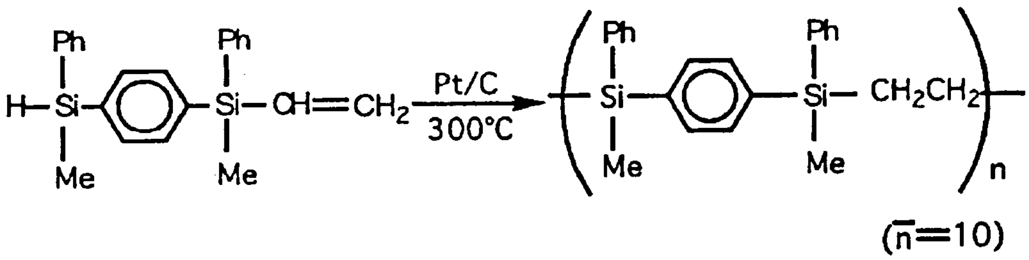


wherein Me represents a methyl group and Ph represents a phenyl group. However, any curable resin composition using its solubility and its terminal group has not been discussed (cf. E. N. Znamenskaya et al., Neftekhimiya, 4, 187 (1964).

Further, Japanese Patent KOKAI Publication No. 207334/1987 discloses a silicon-containing reactive polymer having a hydrosilyl group or a cyclic olefin group, which is represented by the formula:

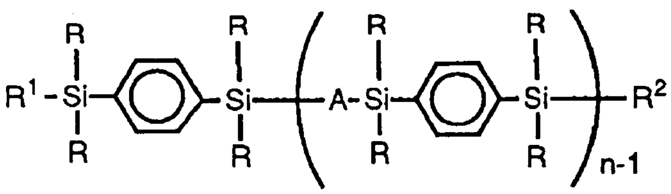

wherein $R^1$ and $R^2$ are the same or different and represent a hydrogen atom or a cyclic olefin group, R is an alkyl group and A is a divalent group derived from a cyclic non-conjugated diene.

When this silicon-containing polymer is prepared, 1,4-bis(methylethylsilyl)benzene is exemplified in the specification of the above KOKAI Publication. However, improvement of the physical properties, in particular, the solubility in solvent of the polymer comprising 1,4-bis(methylethylsilyl)benzene is not disclosed.

EP-A-0510655 describes polysilylethylene arylene polymers obtained from organic silicon compounds.

## SUMMARY OF THE INVENTION

An object of the present invention is to provide a novel silicon-containing reactive polymer which has good solubility in solvents while maintaining good heat resistance and can be cross-linked.

Another object of the present invention is to provide a curable resin comprising the novel silicon-containing reactive polymer.

According to a first aspect of the present invention, there is provided a silicon-containing polymer comprising, in its backbone, at least 30 % by weight of at least one structural unit selected from the group consisting of

$$-Si(R^1)(R^2)\text{-p-}C_6H_4\text{-}Si(R^1)(R^2)\text{-}CH_2CH_2\text{-} \quad (1)$$

$$-Si(R^1)(R^2)\text{-}CH_2CH_2SiMe_2\text{-p-}C_6H_4\text{-}SiMe_2CH_2CH_2\text{-} \quad (2)$$

$$-Si(R^1)(R^2)\text{-m-}C_6H_4\text{-}Si(R^1)(R^2)\text{-}CH_2CH_2\text{-} \quad (3)$$

wherein $R^1$ and $R^2$ represent an organic group having 1 to 20 carbon atoms or a halogen atom, provided that $R^1$ and $R^2$ are different in the formulas (1) and (2) or are the same or different in the formula (3)
and having, as a terminal group, a vinylsilyl group of the formula (4):

$$CH_2=CR'\text{-}Si(R)_2\text{-} \quad (4)$$

wherein R is an organic group having 1 to 20 carbon atoms or a halogen atom, and R' is a hydrogen atom, a methyl group, a phenyl group or a trimethylsiloxy group.

According to a second aspect of the present invention, there is provided a curable resin composition comprising (A) a novel silicon-containing reactive polymer of the present invention, (B) a silicon-containing compound having at least two SiH bonds in a molecule, and (C) a hydrosilylation catalyst.

## DETAILED DESCRIPTION OF THE INVENTION

The silicon-containing reactive polymer is characterized in that its backbone comprises at least 30 % by weight of at least one structural unit selected from the group consisting of the structural units of the formulas (1), (2) and (3).

Specific examples of the organic groups for $R^1$ and $R^2$ are a methyl group, an ethyl group, a n-propyl group, an isopropyl group, a n-butyl group, a tert.-butyl group, an isoamyl group, a n-octyl group, a n-nonyl group, a phenyl group and a trimethylsiloxy group. As the halogen atom, a chlorine atom is preferred.

As a combination of $R^1$ and $R^2$ in the formulas (1) and (2), a combination of (methyl and phenyl), (methyl and methyl), (ethyl and phenyl), (methyl and trimethylsiloxy), or (phenyl and trimethylsiloxy) is preferred. Among them, the combination of methyl and phenyl is more preferred.

In the formula (3), in addition to the above combinations, a combination of (methyl and methyl), (ethyl and ethyl), (phenyl and phenyl), or (trimethylsiloxy and trimethylsiloxy) is preferred as a combination of $R^1$ and $R^2$. Among them, the combination of methyl and methyl, or methyl and phenyl is more preferred.

In the present invention, the silicon-containing reactive polymer of the present invention has, as a terminal group, a vinylsilyl group of the formula: $CH_2=CR'\text{-}Si(R)_2\text{-}$ wherein R is an organic group having 1 to 20 carbon atoms or a halogen atom, and R' is a hydrogen atom, a methyl group, a phenyl group or a trimethylsiloxy group, preferably a hydrogen atom.

Preferred examples of the organic group for R are the same as those exemplified in connection with $R^1$ and $R^2$. Among them, a methyl group or a phenyl group is preferred.

In view of the heat resistance and the solubility, the silicon-containing reactive polymer has preferably a number average molecular weight of 1000 to 50000, more preferably 1500 to 30000 which is measured by gel permeation chromatography using polystyrene standards. A molecular weight distribution ($M_w/M_n$) is preferably 5 or less, more preferably 3 or less.

In general, the backbone of the silicon-containing reactive polymer of the present invention is a straight chain, while it may have a branched structure to an extent that the solubility of the polymer is not deteriorated significantly.

Preferred examples of the chemical structure of the silicon-containing reactive polymer of the present inven-

tion are as follows:

$CH_2$=CH-[Si(Ph)(Me)-p-$C_6H_4$-Si(Ph)(Me)-$CH_2CH_2$]$_n$-Si(Ph)(Me)-p-$C_6H_4$-Si(Ph)(Me)-CH=$CH_2$,
$CH_2$=CH-[Si(Ph)(Me)-$CH_2CH_2$-$SiMe_2$-p-$C_6H_4$-$SiMe_2$-$CH_2CH_2$]$_n$-Si(Ph)(Me)-CH=$CH_2$,
$CH_2$=CH-[$SiMe_2$-m-$C_6H_4$-$SiMe_2$-$CH_2CH_2$-$SiMe_2$-p-$C_6H_4$-$SiMe_2CH_2CH_2$]$_n$-$SiMe_2$-m-$C_6H_4$-$SiMe_2$-CH=$CH_2$,
$CH_2$=CH-[$SiMe_2$-p-$C_6H_4$-$SiMe_2$-$CH_2CH_2$-$SiMe_2$-m-$C_6H_4$-$SiMe_2$-$CH_2CH_2$]$_n$-$SiMe_2$-p-$C_6H_4$-$SiMe_2$-CH=$CH_2$,
$CH_2$=CH-[$SiMe_2$-p-$C_6H_4$-$SiMe_2$-$CH_2CH_2$-SiPhMe-m-$C_6H_4$-SiPhMe-$CH_2CH_2$]$_n$-$SiMe_2$-m-$C_6H_4$-$SiMe_2$-CH=$CH_2$,
$CH_2$=CH-[$SiMe_2$-m-$C_6H_4$-$SiMe_2$-$CH_2CH_2$-$SiMe_2$-$CH_2CH_2$]$_n$-$SiMe_2$-m-$C_6H_4$-$SiMe_2$-CH=$CH_2$,
$CH_2$=CH-[$SiMe_2$-m-$C_6H_4$-$SiMe_2$-$CH_2CH_2$-SiPhMe-$CH_2CH_2$]$_n$-$SiMe_2$-m-$C_6H_4$-$SiMe_2$-CH=$CH_2$,
$CH_2$=CH-[$SiMe_2$-m-$C_6H_4$-$SiMe_2$-$CH_2CH_2$-$SiMe_2$-$CH_2$-$SiMe_2$-$CH_2CH_2$]$_n$ $SiMe_2$-m-$C_6H_4$-$SiMe_2$-CH=$CH_2$.

The silicon-containing reactive polymer of the present invention may be prepared by various methods. In a preferred embodiment, a silicon-containing compound having two SiH groups in a molecule of the formula:

$$HSiR_2H \text{ or } HSiR_2\text{-}X\text{-}R_2H$$

wherein R is the same as defined above, and X is a divalent organic group having 1 to 50 carbon atoms or an oxygen atom (a compound D), and a silicon-containing compound having two vinylsilyl groups in a molecule of the formula:

$$CH_2=CR'\text{-}SiR_2\text{-}CR'=CH_2 \text{ or } CH_2=CR'\text{-}SiR_2\text{-}Y\text{-}SiR_2\text{-}CR'=CH_2$$

wherein R and R' are the same as defined above, and Y is a divalent organic group having 1 to 50 carbon atoms or an oxygen atom (a compound E)
are polymerized by the hydrosilylation reaction using the latter compound E in an excessive amount to the former compound D.

Specific examples of the divalent organic group for X and Y are as follows:

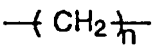 (n=1~4), 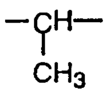, 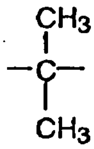, 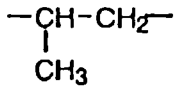, — $C_6H_4$, — ,

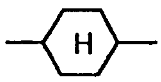, 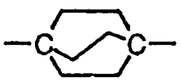, 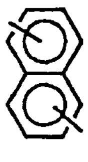, 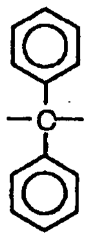, 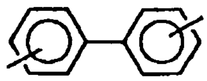,

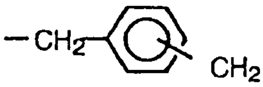, —O— ,

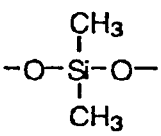, 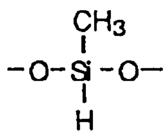, 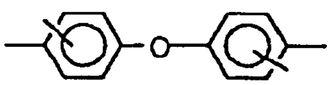

Among them,
$-(CH_2)_n-$ (n=1~4), —$C_6H_4$—, —O— and —$OSiMe_2O$— are preferred. In particular, $-(CH_2)_n-$ (n = 1 - 4) and

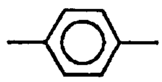

are preferred.

To form the structural unit (1), which is one of the characteristics of the silicon-containing reactive polymer of the present invention, in the backbone, at least one of a silicon-containing compound of the formula:

$$HSi(R^1)(R^2)\text{-p-}C_6H_4\text{-}Si(R^1)(R^2)H$$

wherein $R^1$ and $R^2$ are the same as defined in the formula (1) and p-$C_6H_4$ represents a p-phenylene group, as the compound D and a silicon containing compound of the formula:

$$CH_2{=}CH\text{-}Si(R^1)(R^2)\text{-p-}C_6H_4\text{-}Si(R^1)(R^2)\text{-}CH{=}CH_2$$

wherein $R^1$, $R^2$ and p-$C_6H_4$ are the same as defined above as the compound E should be used as a component of the hydrosilylation polymerization.

To form the structural unit (2) in the backbone, a combination of $HSiMe_2$-p-$C_6H_4$-$SiMe_2H$ as the compound D and

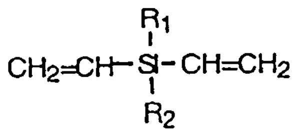

wherein $R^1$ and $R^2$ are the same as defined in the formula (2) as the compound E, or a combination of

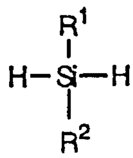

wherein $R^1$ and $R^2$ are the same as defined in the formula (2) as the compound D and $CH_2$=CH-$SiMe_2$-p-$C_6H_4$-$SiMe_2$-CH=$CH_2$ should be used as the components in the hydrosilylation polymerization.

To form the structural unit (3) in the backbone, at least one of a silicon-containing compound of the formula:

$$HSi(R^1)(R^2)\text{-m-}C_6H_4\text{-}Si(R^1)(R^2)H$$

wherein $R^1$ and $R^2$ are the same as defined in the formula (3) and m-$C_6H_4$ represents a m-phenylene group, as the compound D and a silicon containing compound of the formula:

$$CH_2{=}CH\text{-}Si(R^1)(R^2)\text{-m-}C_6H_4\text{-}Si(R^1)(R^2)\text{-}CH{=}CH_2$$

wherein $R^1$, $R^2$ and m-$C_6H_4$ are the same as defined above as the compound E should be used as a component of the hydrosilylation polymerization.

In general, since the components D and E are bifunctional compounds, a linear silicon-containing polymer is formed. When a part of at least one of the compounds D and E is replaced by a silicon-containing compound having 3 or more SiH groups or vinylsilyl group is used, the polymer has branches. The tri- or polyfunctional compound D or E may be used in an amount that the solubility of the polymer of the present invention does not deteriorate.

The polymerization can be carried out using the compounds D and E and a catalyst in the presence or absence of a solvent.

A polymerization temperature is preferably from -50°C to 200°C, more preferably from 0°C to 150°C.

A polymerization rate can be controlled by the use of a catalyst. A kind of the catalyst depends on the combination of the monomers. In the polymerization process of the present invention, any of conventional catalysts used for a so-called hydrosilylation reaction may be used. Examples of such catalyst are metal platinum. platinum supported on a carrier such as alumina, silica or carbon black, a complex of platinum with an alcohol, an aldehyde or a ketone, a platinum-olefin complex (e.g. $Pt(CH_2{=}CH_2)_2(PPh_3)_2$, $Pt(CH_2{=}CH_2)_2Cl_2$ (Ph = phenyl)), a platinum-vinylsiloxane complex (e.g. $Pt_n(ViMe_2SiOSiMe_2Vi)_m$, $Pt_n[(MeViSiO)_4]_m$ (Me = methyl, Vi = vinyl, m = an integer, n = an integer)), a platinum-phosphine complex (e.g. $Pt(PPh_3)_4$, $Pt(PBu)_4$ (Ph = phenyl, Bu = butyl)), a platinum-phosphite complex (e.g. $Pt[P(OPh)_3]_4$ (Ph = phenyl)), dicarbonyl-dichloroplatinum, a platinum-hydrocarbon complex dIsclosed in U.S Patent Nos. 3,159,601 and 3,159,662 (both to Ashby) and a platinum-alcholate catalyst disclosed in U.S. Patent No. 3,220,972 (to Lamoreaux) the disclosure of which is hereby incorporated by reference. Further, a platinum chloride-olefin complex disclosed in U.S. Patent No. 3,516,946 (to Modic), can be used in the process of the present invention.

Examples of the catalyst other than the platinum base catalysts are $RhCl(PPh_3)_3$, $PhCl_3$, $RhAl_2O_3$, $RuCl_3$, $IrCl_3$, $FeCl_3$, $AlCl_3$, $PdCl_2.2H_2O$, $NiCl_2$, $TiCl_2$, and so on.

The catalysts may be used independently or as a mixture of two or more of them.

In view of the catalytic activity, chloroplatinic acid, the platinum-olefin complex, the platinum-vinylsiloxane complex and platinum-acetyl acetonate are preferred.

An amount of the catalyst is not critical. In general, the catalyst is used in an amount of $10^{-1}$ to $10^{-8}$ mol, preferably $10^{-3}$ to $10^{-6}$ mol, per one mole of the hydrosilyl group.

When the solvent is used, there is used a hydrocarbon solvent (e.g. benzene, toluene, hexane, heptane), an ether (e.g. tetrahydrofuran, 1,4-dioxane, diethyl ether), a ketone (e.g. acetone, methyl ethyl ketone) and a halogen-containing solvent (e.g. chloroform, methylene chloride, 1,2-dichloromethane). Among them, toluene, tetrahydrofuran and chloroform are preferred.

The solvents may be used as a mixture of two or more of them.

When the solvent is used, its amount is not larger than 50 liters per one mol of the monomer(s).

Now, the curable composition of the present invention which comprises (A) the silicon-containing reactive polymer of the present invention, (B) the silicon-containing compound having at least two SiH bonds in a molecule and (C) the hydrosilylation catalyst will be explained in detail.

The component (A) is the above described silicon-containing polymer having the vinylsilyl groups (4) at each molecular end. This polymer may be a straight one or a partly branched one. Preferably, the polymer (A) has a number average molecular weight of 1000 to 50000.

Preferred examples of the silicon-containing compound (B) are a hydrosilane of the formula:

$$H_aSiR_{4-a},$$

$$H_{a-1}SiR_{4-a}\text{-}Z_m(SiRH)_n\text{-}Si_{4-a}H_{a-1},$$

$$R'\text{-}Z_m(SiRH)_{n+2}\text{-}R' \text{ or}$$

$$(Z\text{-}SiR_{4-a}H_{a-2})_{n+2}$$

wherein R is a monovalent organic group having 1 to 20 carbon atoms or a halogen atom, R' is a hydrogen atom, a methyl group, an ethyl group, a phenyl group or a trimethylsiloxy group, Z is the same divalent organic group as that for X or Y, a is 2, 3 or 4, m is an integer of 1 to 31, and n is an integer of 0 to 30; a hydrosilane comprising an aromatic ring at least three hydrogen atoms of which are substituted by $SiR_2H$, $SiRH_2$ and/or $SiH_3$ in which R is the same as defined above. They may be used independently or in combination of two or more of them.

Specific examples of the monovalent organic group for R are a methyl group, an ethyl group, a n-propyl group, an isopropyl group, a n-butyl group, a tert-butyl group, an isoamyl group, a n-octyl group, a n-nonyl group, a phenyl group and a trimethylsiloxy group. As the halogen atom, a chlorine atom is preferred.

As the R' group, a hydrogen atom is preferred.

When plural Z groups are present in one compound, they may be the same or different.

As the Z group, $-(CH_2)_n-$ (n = 1 - 4), -O-, $-OSiMe_2O-$, and

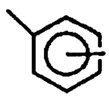

are preferred.

Specific examples of the compound (B) are $Me_3SiO-[Si(H)O]_nSiMe_3$ (n = 2 - 50), [Si(H)MeO]n (n = 3 - 5), 1,3,5-tris-(dimethylsilylbenzene) and 1,2,4,5-tetrakis(dimethylsilylbenzene), $PhSiH_3$.

The silicon-containing reactive polymer (A) and the silicon-containing compound (B) may be used in various ratios. Preferably, they are used in such amounts that a ratio of the number of the SiH groups in the compound (B) to the vinylsilyl groups of the silicon-containing reactive polymer (A) is from 0.5 to 5, more preferably from 0.8 to 3.

As the hydrosilylation catalyst (C), the above described hydrosilylation catalyst used in the preparation of the silicon-containing reactive polymer of the present invention. Preferred kind and amount of the catalyst are the same as disclosed above.

A solvent may be optionally contained in the curable composition to improve the compatibility of the silicon-containing reactive polymer (A) to the silicon-containing compound (B) and the catalyst (C), and processability of the composition.

When the solvent is contained in the curable composition, there is used a hydrocarbon solvent (e.g. benzene, toluene, hexane, heptane), an ether (e.g. tetrahydrofuran, 1,4-dioxane, diethyl ether), a ketone (e.g. acetone, methyl ethyl ketone) and a halogen-containing solvent (e.g. chloroform, methylene chloride, 1,2-dichloromethane). Among them, tetrahydrofuran, toluene and chloroform are preferred. The solvents may be used as a mixture of two or more of them.

To improve storage stability of the curable composition of the present invention, a storage stability improver can be added. Examples of the storage stability improver are compounds having an aliphatic unsaturated group, organic phosphorus compound, organic sulfur compounds, nitrogen-containing organic compounds and tin compounds, organic peroxides.

Specific examples of the compound having the aliphatic unsaturated group are propargyl compounds, ene-yne compounds, and maleate esters. Specific examples of the phosphorus compound are triorganophosphines, diorganophosphines, organophosphines and triorganophosphites. Specific examples of the sulfur compound are organomercaptans, diorganosulfides, hydrogen sulfide, benzothiazole and benzothiazole sulfide. Specific examples of the nitrogen-containing compound are ammonia, primary, secondary and tertiary alkylamines, arylamines, urea and hydrazine. Specific examples of the tin compound are stannous chloride dihydrate and stannous carbonate. Specific examples of the organic peroxide are di-tert.-butyl peroxide, dicumyl peroxide, benzoyl peroxide and tert.-butyl perbenzoate.

A temperature for curing the curable composition of the present Invention is preferably from 0 to 250°C. The curing temperature may be increased stepwise or continuously, while it may be kept constant.

A cured material produced from the curable composition of the present invention has better heat resistance, in particular, much higher decomposition starting temperature than the uncured composition.

## PREFERRED EMBODIMENTS OF THE INVENTION

The present invention will be illustrated by the following Examples, which do not limit the scope of the present invention in any way.

### Example 1

In a solution of methylphenyldivinylsilane (18.02 g, 103 mmol) and a 1 wt. % solution of platinum-vinylsiloxane complex ($188 \times 10^{-4}$ mmol, $1 \times 10^{-4}$ mol per one mol of SiH) in toluene (226 μl), which were dissolved in absolute toluene (100 ml), a solution of 1,4-bis(dimethylsilyl)benzene (18.30 g, 94 mmol) dissolved in absolute toluene (100 ml) was slowly dropwise added at room temperature under a nitrogen atmosphere. After the dropwise addition, the reaction mixture was stirred at room temperature one day, and volatile materials were evaporated off to obtain a crude polymer. The crude polymer was dissolved in hexane (48 ml) and subjected to silica gel column chromatography using toluene as an eluent to obtain $CH_2=CH-[Si(Ph)(Me)-CH_2CH_2-SiMe_2-p-C_6H_4-SiMe_2-CH_2CH_2]_n-Si(Ph)(Me)-CH=CH_2$ as a hexane fraction (9.68 g) (hereinafter referred to as "Fr-1") and as a toluene fraction (12.60 g) (hereinafter referred to as "Fr-2").

Fr-1 had a number average molecular weight of 1600 and a weight average molecular weight of 3400, and Fr-2 had a number average molecular weight of 5700 and a weight average molecular weight of 8700, all according to the GPC measurement.

By the quantitative measurement of the vinyl group content by $^1$H-NMR in the presence of dibromomethane as an internal standard, the vinyl group contents of Fr-1 and Fr-2 were 81.3 mmol/100 g and 29.6 mmol/100 g.

$^1$H-NMR data of Fr-1 were as follows:
δ ($CDC1_3$): 0.49 (bs, $SiC\underline{H}_3$), 0.51 (bs, $SiPhC\underline{H}_3$), 0.58 (bs, $CH_2=CH-SiPhC\underline{H}_3$), 0.91-0.99 (m, $SiC\underline{H}_2C\underline{H}_2$), 5.99

(dd, vinyl), 6.32 (dd, vinyl), 6.53 (dd, vinyl), 7.54-7.75 (m, aromatic).

$^1$H-NMR data of Fr-2 were as follows:

δ ($CDC1_3$): 0.45 (bs, $Si\underline{CH_3}$), 0.47 (bs, $SiPh\underline{CH_3}$), 0.54 (bs, $CH_2$=CH-$SiPh\underline{CH_3}$), 0.83-0.95 (m, $Si\underline{CH_2}\underline{CH_2}$), 5.95 (dd, vinyl), 6.28 (dd, vinyl), 6.49 (dd, vinyl), 7.50-7.67 (m, aromatic).

Example 2

To a mixture of the silicon-containing reactive polymer Fr-1 obtained in Example 1 (312 mg) and $Me_3Si(SiHMeO)_nSiMe_3$ (n = 3 - 5) (PS 118 manufactured by TISSO Corporation) (25.5 mg) (these amounts corresponding to one mol of the SiH group per one mol of the alkenyl group), benzothiazole (0.686 mg) as a retarder and a solution of platinum-vinylsiloxane complex in xylene (9.71 x $10^{-8}$ mmol/mg) (26.13 mg, 2.54 x $10^{-4}$ mmol corresponding to 1 x $10^{-3}$ mol per one mol of the SiH group) were added. Further, toluene (0.2 ml) was added, and the mixture was stirred and reacted at 150°C for 1 hour to obtain a cured material (a) in a plastic state, which had, a gel content of 72.8 %.

Example 3

To a mixture of the silicon-containing reactive polymer Fr-1 obtained in Example 1 (362 mg) and trisdimethylsilylbenzene (hereinafter referred to as "TDSB") (24.8 mg) (these amounts corresponding to one mol of the SiH group per one mol of the alkenyl group), benzothiazole (0.796 mg) as a retarder and a solution of platinum-vinylsiloxane complex in xylene (9.71 x $10^{-8}$ mmol/mg) (30.3 mg, 2.94 x $10^{-4}$ mmol corresponding to 1 x $10^{-3}$ mol per one mol of the SiH group) were added. Further, toluene (0.2 ml) was added, and the mixture was stirred and reacted at 150°C for 2 hours to obtain a cured material (b), which had a gel content of 75.8 %.

Example 4

To a mixture of the silicon-containing reactive polymer Fr-2 obtained in Example 1 (364 mg) and TDSB (12.9 mg) (these amounts corresponding to 1.4 mol of the SiH group per one mol of the alkenyl group), benzothiazole (0.291 mg) as a retarder and a solution of platinum-vinylsiloxane complex in xylene (9.71 x $10^{-8}$ mmol/mg) (11.1 mg, 1.08 x $10^{-4}$ mmol corresponding to 1 x $10^{-4}$ mol per one mol of the SiH group) were added. Further, toluene (0.2 ml) was added, and the mixture was stirred and reacted at 150°C for 2 hours to obtain a cured material (c) in a plastic state, which had, a gel content of 77.8 %.

Comparative Example 1

In a solution of 1,9-decadiene (1.66 g, 12 mmol) and a 1 wt. % solution of platinum-vinylsiloxane complex (1 x $10^{-4}$ mol per one mol of SiH) in toluene (12 μl), which were dissolved in absolute toluene (6 ml), a solution of 1,1,3,3,5,5-hexamethyltrisiloxane (2.09 g, 10 mmol) dissolved in absolute toluene (6 ml) was slowly dropwise added at room temperature under a nitrogen atmosphere. After the dropwise addition, the reaction mixture was stirred at room temperature one day, and volatile materials were evaporated off to obtain a crude polymer. The crude polymer was dissolved in toluene and filtrated through a silica gel column, and the polymer was re-precipitated using toluene/methanol to obtain $CH_2$=CH-[$(CH_2)_8$-$CH_2CH_2$-$SiMe_2O$-$SiMe_2O$-$SiMe_2$-$CH_2CH_2$]$_n$-$(CH_2)_8$-CH=$CH_2$ (3.01 g).

By the quantitative measurement of the vinyl group content by $^1$H-NMR in the presence of 1,3,5-tribromobenzene as an internal standard, the vinyl group contents of this silicon-containing polymer was 52.7 mmol/100 g, and the content of internal olefin of this polymer was 0.153 mmol/g. The results of $^1$H-NMR indicated that the vinyl groups were not quantitatively introduced at molecular ends.

Comparative Example 2

To a mixture of silicon-containing polymer obtained in Comparative Example 1 (333 mg) and TDSB (14.7 mg) (these amounts corresponding to one mol of the SiH group per one mol of the alkenyl group), benzothiazole (0.047 mg) as a retarder and a solution of platinum-vinylsiloxane complex in xylene (9.71 x $10^{-8}$ mmol/mg) (180 mg, 0.175 x $10^{-4}$ mmol corresponding to 1 x $10^{-4}$ mol per one mol of the SiH group) were added. Further, toluene (0.1 ml) was added, and the mixture was stirred and reacted at 150°C for 3 hours to obtain a cured material (d), which had a gel content of 32.0 %.

The results of thermogravimetric analysis (TGA) of the silicon-containing polymers obtained in Example 1 and Comparative Example 1 are shown in Table 1. The TGA analysis was carried out under nitrogen atmosphere at a heating rate of 20°C/min.

Table 1

| | | TGA weight loss (%) at | | $T_{d5}$/°C*1) |
|---|---|---|---|---|
| | | 400°C | 500°C | |
| Example 1 | Fr-1 | 4.7 | 23.0 | 404 |
| | Fr-2 | 4.3 | 23.6 | 404 |
| Comp. Ex. 1 | | 10.2 | 98.4 | 366 |

Note: *1) $T_{d5}$: A temperature at which the weight loss is 5 %.

From the results in Table 1, the silicon-containing reactive polymer of the present invention had the much smaller weight loss at 500°C and better heat stability than that of the polymer in Comparative Example 1.

With each of the cured materials (a), (b), (c) and (d) obtained in Examples 2, 3 and 4 and Comparative Example 2, respectively, a decomposition starting temperature was measured. The results are shown in Table 2.

Table 2

| | | Decomposition starting temperature (°C) | |
|---|---|---|---|
| Examples 2 and 3 | Fr-1 | Uncured: | 254 |
| | | Cured material (a): | 290 |
| | | Cured material (b): | 320 |
| Example 4 | Fr-2 | Uncured: | 138 |
| | | Cured material (c): | 335 |
| Comp. Ex. 2 | | Uncured: | 245 |
| | | Cured material (d): | 250 |

From the results in Table 2, it is understood that the decomposition starting temperature of each cured material of the present invention was much higher than that of the uncured polymer, and the cured material had good heat resistance. In Comparative Example 2, the increase of the decomposition starting temperature of the cured material was small, and the heat resistance of the cured material was not improved.

<u>Synthesis Example 1</u>

Preparation of 1,3-bis(ethoxydimethylsilyl)benzene

In a flask containing dried magnesium (4.81 g, 0.198 mol), $Me_2Si(OEt)_2$ (26.81 g, 0.181 mol) and tetrahydrofuran (THF) (20 ml) were charged. Then, about 1 ml of a solution of 1,3-dibromobenzene (20.31 g, 0.0861 mol) dissolved in THF (25 ml) was added under a nitrogen atmosphere, and the mixture was heated to start the reaction. Another 1 ml of the solution was added after 20 minutes. While maintaining the heat generation, the rest of the solution of 1,3-dibromobenzene was dropwise added over about 45 minutes. After the addition of the solution, the mixture was heated for 3 hours while refluxing THF.

After consumption of the starting material was confirmed by gas chromatography (GC), THF and formed salt were removed. By distillation under reduced pressure, a desired product was obtained as a colorless transparent liquid. Yielded amount: 3.81 g (0.048 mol). Yield: 57 %. Boiling point: 84-86°C/0.82-0.9 Torr.

$^1$H-NMR (δ, $CDCl_3$): 0.40 (s, $SiC\underline{H}_3$, 12H), 1.20 (t, $OCH_2C\underline{H}_3$, J = 7.3 Hz, 6H), 3.69 (q, $OC\underline{H}_2CH_3$, J = 7.3 Hz, 4H), 7.40 (t, aromatic J = 7.4 Hz, 1H), 7.62 (d, aromatic, J = 7.4 Hz, 2H), 7.81 (s, aromatic, 1H).

Synthesis Example 2

Preparation of 1,3-bis(vinyldimethylsilyl)benzene

In a flask, 1,3-bis(ethoxydimethylsilyl)benzene prepared in Synthesis Example 1 (13.81 g, 49 mmol) and THF (10 ml) were charged. Under a nitrogen atmosphere, a 1.0 M solution of $CH_2$=CHMgBr in THF (108 ml, 108 mmol) was dropwise added to the mixture in the flask at room temperature over about 30 minutes. After the addition of the Grignard reagent, THF was refluxed for 5 hours. After keeping the mixture at room temperature overnight, the consumption of the starting compounds and the formation of the desired produced were confirmed by GC.

To the reaction mixture, methanol (10 ml) was added to decompose excessive $CH_2$=CHMgBr, and THF and the formed salt were removed. By distillation under reduced pressure, the above entitled compound was isolated as a colorless transparent liquid. Yield: 50 %. Boiling point: 75-78°C/1.8 Torr.

$^1$H-NMR (δ, $CDCl_3$): 0.36 (s, Si(C$\underline{H}_3$)$_2$, 12H), 5.87 (dd, $CH_2$=CH-, trans, J = 20.3 and 4.0 Hz, 2H), 6.07 (dd, C$\underline{H}_2$=CH-, cis, J = 14.6 and 4.0 Hz, 2H), 6.31 (dd, C$\underline{H}_2$=CH-, J = 20.3 and 14.6 Hz, 2H), 7.35 (t, aromatic J = 7.3 Hz, 2H), 7.54 (d, aromatic, J = 7.3 Hz, 2H), 7.68 (s, aromatic, 1H).

Synthesis Example 3

Preparation of 1,3-bis(dimethylsilyl)benzene

In a flask containing dried magnesium (5.81 g, 0.239 mol), $Me_2$SiHCl (19.39 g, 0.205 mol) and THF (25 ml) were charged. Then, a solution of 1,3-dibromobenzene (23.03 g, 0.0976 mol) dissolved in THF (30 ml) was dropwise added at room temperature under a nitrogen atmosphere. As soon as the addition of the solution, heat was vigorously generated. Therefore, the solution was dropwise added over 1.5 hours while cooling the flask in a water bath to keep the mild heat generation. In the course of the addition of the solution, since a salt was formed, THE was added (20 ml x 3).

After stirring the mixture at room temperature for 1.5 hours, the consumption of the starting compounds and the formation of the desired produced were confirmed by GC. The reaction mixture was suction filtrated through celite. To the residue (the liquid + salt), hexane was added and well stirred and the mixture was filtrated through a crimped filter paper. The filtrate was distilled to remove the solvent and obtain a crude product (14.9 g).

By the distillation under reduced pressure, the above entitled compound was isolated as a colorless transparent liquid. Yielded amount: 7.2 g. Yield: 38 %. Boiling point: 100-102°C/20 Torr.

$^1$H-NMR (δ, $CDCl_3$): 0.36 (d, SiH(C$\underline{H}_3$)$_2$ J = 3.9 Hz, J($^{13}$C-$^1$H) = 119 Hz, 12H), 4.44 (septet, Si$\underline{H}$($CH_3$)$_2$, J = 3.9 Hz, J($^{13}$C-$^1$H) = 188 Hz, 1H), 7.37 (t, aromatic, J = 7.0 Hz, 1H), 7.56 (d, aromatic, J = 7.0 Hz, 2H), 7.73 (s, aromatic, 1H).

Synthesis Example 4

Preparation of 1,3-bis(methylphenyisilyl)benzene

In the same manner as in Synthesis Example 3 except that Mg (5.92 g, 0.24 mol), PhMeSiHCl (35.80 g, 0.223 mol) and 1,3-dibromobenzene (26.37 g, 0.112 mol) were used, the reaction was carried out in THF to obtain the above entitled compound as a colorless transparent liquid. Yielded amount: 17.36 g. Yield: 53 %. Boiling point: 150-170°C (bath temperature)/0.60 Torr.

$^1$H-NMR (δ, $CDCl_3$): 0.62 (d, SiHPhC$\underline{H}_3$, J = 3.8 Hz, J($^{12}$C-$^1$H) = 121 Hz, 12H), 4.94 (q, Si$\underline{H}$PhC$H_3$, J = 3.8 Hz, J($^{28}$C-$^1$H) = 195 Hz, 2H), 7.29-7.44 (m, aromatic, 7H), 7.48-7.63 (m, aromatic, 6H), 7.80 (s, aromatic, 1H).

Example 5

In a solution of 1,3-bis(vinyldimethylsilyl)benzene prepared in Synthesis Example 2 (1.87 g, 7.60 mmol) and a 1 wt. % solution of platinum-vinylsiloxane complex (7.1 x $10^{-4}$ mmol) in toluene (9.1 µl), which were dissolved in absolute toluene (4.5 ml), a solution of 1,4-bis(dimethylsilyl)benzene (LS-7310 manufactured by Shin-etsu Chemical Co., Ltd.) (1.23 g, 6.33 mmol) dissolved in absolute toluene (4.5 ml) was dropwise added over 20 minutes at room temperature under a nitrogen atmosphere. Thereafter, the mixture was stirred at room temperature for 4 hours following by being kept standing overnight. According to $^1$H-NMR of the reaction mixture, the disappearance of the SiH group was confirmed.

The reaction mixture was subjected to silica gel column chromatography with toluene as an eluent, and the fractions were distilled to remove toluene to obtain a crude polymer (about 3.05 g).

The crude polymer (3.00 g) was purified by reprecipitating it with toluene (30 ml) and methanol (60 ml) to obtain a polycarbosilane having the following structure as a sticky solid (2.14 g). Yield: 69 %.

$CH_2$=CH-[$SiMe_2$-m-$C_6H_4$-$SiMe_2$-$CH_2CH_2$-$SiMe_2$- p-$C_6H_4$-$SiMe_2$- $CH_2CH_2$]$_n$-$SiMe_2$-m-$C_6H_4$-$SiMe_2$CH=$CH_2$

According to the GPC measurement, the number average molecular weight was 2500 and the weight average molecular weight was 3500.

$^1$H-NMR (300 MHz, $CDC1_3$): δ 0.23 (s, -Si(C$\underline{H}_3$)$_2$), 0.24 (s, Si(C$\underline{H}_3$)$_2$), 0.36 (s, -Si(C$\underline{H}_3$)$_2$ (CH=$CH_2$) ), 0.67 (s, -Si(C$\underline{H}_3$)$_2$C$\underline{H}_2$C$\underline{H}_2$-Si(C$\underline{H}_3$)$_2$-), 5.75 (dd, -Si($CH_3$)$_2$ (CH=$CH_2$) ), 6.06 (dd, -Si($CH_3$)$_2$ (CH=C$\underline{H}_2$) ), 6.30 (dd, -Si($CH_3$)$_2$ (CH=C$\underline{H}_2$) ) 7.26-7.67 (m, aromatic).

According to the quantitative analysis of the vinyl group content measured by $^1$H-NMR in the presence of dibromoethane as an internal standard, the polycarbosilane had the vinyl group content of 0.437 mmol/g.

Example 6

In a solution of 1,4-bis(vinyldimethylsilyl)benzene (LS-7820 manufactured by Shin-etsu Chemical Co., Ltd.) (2.95 g, 12 mmol) and a 1 wt. % solution of platinum-vinylsiloxane complex (1.0 x $10^{-3}$ mmol) in toluene (12 μl), which were dissolved in dried toluene (6 ml), a solution of 1,3-bis(dimethylsilyl)benzene prepared in Synthesis Example 3 (1.96 g, 10 mmol) dissolved in dried toluene (6 ml) was dropwise added over 10 minutes at room temperature under a nitrogen atmosphere. Thereafter, the mixture was stirred at room temperature for 4 hours following by being kept standing overnight. According to $^1$H-NMR of the reaction mixture, the disappearance of the SiH group was confirmed.

The reaction mixture was subjected to silica gel column chromatography with toluene as an eluent, and the fractions were distilled to remove toluene to obtain a crude polymer containing a small amount of toluene (about 5.25 g).

The crude polymer (5.10 g) was purified by reprecipitating it using toluene (50 ml) and methanol (100 ml) to obtain a polycarbosilane having the following structure as a white sticky solid (3.62 g). Yield: 75 %.

$CH_2$=CH-[$SiMe_2$-p-$C_6H_4$-$SiMe_2$-$CH_2CH_2$-$SiMe_2$-m-$C_6H_4$-$SiMe_2$- $CH_2CH_2$]$_n$-$SiMe_2$-p-$C_6H_4$-$SiMe_2$CH=$CH_2$

According to the GPC measurement, the number average molecular weight was 3600 and the weight average molecular weight was 6100.

$^1$H-NMR (300 MHz, $CDC1_3$): δ 0.24 (s, -Si(C$\underline{H}_3$)$_2$), 0.25 (s, - Si(C$\underline{H}_3$)$_2$), 0.35 (s, -Si($CH_3$)$_2$ (CH=$CH_2$) ), 0.69 (s, -Si($CH_3$)$_2$ C$\underline{H}_2$C$\underline{H}_2$Si-(C$\underline{H}_3$)$_2$-), 5.76 (dd, Si($CH_3$)$_2$ (CH=C$\underline{H}_2$) ), 6.06 (dd, Si($CH_3$)$_2$ (CH=C$\underline{H}_2$) ), 6.30 (dd, -Si($CH_3$)$_2$ (CH=C$\underline{H}_2$) ) 7.26-7.67 (m, aromatic).

According to the quantitative analysis of the vinyl group content measured by $^1$H-NMR in the presence of dibromoethane as an internal standard, the polycarbosilane had the vinyl group content of 0.474 mmol/g.

Example 7

In a solution of 1,4-bis(vinyldimethylsilyl)benzene (LS-7820 manufactured by Shin-etsu Chemical Co., Ltd.) (0.492 g, 2 mmol) and a 1 wt. % solution of platinum-vinylsiloxane complex (2.5 x $10^{-4}$ mmol) in toluene (3.0 μl), which were dissolved in absolute toluene (1.5 ml), a solution of 1,3-bis(methylphenylsilyl)benzene prepared in Synthesis Example 4 (0.58 g, 2.5 mmol) dissolved in absolute toluene (2.5 ml) was dropwise added over 10 minutes at room temperature under a nitrogen atmosphere. Thereafter, the mixture was stirred at room temperature for 6 hours following by being kept standing overnight. According to $^1$H-NMR of the reaction mixture, the disappearance of the SiH group was confirmed.

The reaction mixture was subjected to silica gel column chromatography with toluene as an event, and the fractions were distilled to remove toluene to obtain a crude polymer (about 1.07 g).

The crude polymer (1.00 g) was purified by reprecipitating it using toluene (10 ml) and methanol (20 ml) to obtain a polycarbosilane having the following structure as a sticky solid (0.64 g). Yield: 64 %.

$CH_2=CH-[SiMe_2-p-C_6H_4-SiMe_2-CH_2CH_2SiPhMe-m-C_6H_4-SiPhMe-CH_2CH_2]_n-SiMe_2-p-C_6H_4-SiMe_2CH=CH_2$

According to the GPC measurement, the number average molecular weight was 2900 and the weight average molecular weight was 4700.

$^1$H-NMR (300 MHz, $CDC1_3$): δ 0.23 (s, $Si(C\underline{H}_3)_2$), 0.36 (s, - SI $(C\underline{H}_3)_2$ $(CH=CH_2)$ ), 0.496 (s, $-SiPh(C\underline{H}_3)$ ), 0.503 (s, $-SiPh(C\underline{H}_3)$), 0.64-0.77(m, $-Si(CH_3)_2$ $C\underline{H}_2CH_2SiPh(CH_3)$-), 0.90-1.03 (m, $-Si(CH_3)_2-C\underline{H}_2C\underline{H}_2SiPh(C\underline{H}_3)$-), 5.76 (dd, $-Si(CH_3)_2$ $(CH=C\underline{H}_2)$), 6.06 (dd, - $Si(CH_3)_2$ $(CH=C\underline{H}_2)$ ), 6.30 (dd,$-Si(CH_3)_2$ $(CH=C\underline{H}_2)$ ), 7.14-7.67 (m, aromatic).

According to the quantitative analysis of the vinyl group content measured by $^1$H-NMR in the presence of dibromoethane as an internal standard, the polycarbosilane had the vinyl group content of 0.5407 mmol/g.

The results of TGA of the silicon-containing reactive polymers obtained in Examples 5, 6 and 7 and Comparative Example 1 are shown in Table 3.

Table 3

| Polymer | Weight loss (%) at | | $T_{d5}$ (°C)$^{*1)}$ |
|---|---|---|---|
| | 400°C | 500°C | |
| Example 5 | 1.2 | 8.9 | 478 |
| Example 6 | 0.9 | 12.6 | 460 |
| Example 7 | 3.1 | 14.3 | 427 |
| Comp. Ex. 1 | 10.2 | 98.4 | 366 |

Note: *1) $T_{d5}$: A temperature at which the weight loss is 5 %.

From the results in Table 3, it is understood that the silicon-containing reactive polymers of the present invention had much smaller weight loss at high temperatures and better heat stability than the polymer of Comparative Example 1.

Example 8

To a mixture of the polycarbosilane obtained in Example 5 (304 mg, 0.133 mol of the vinyl group) and TDSB (11.2 mg, 0.133 mol of the SiH group corresponding to one mol of the SiH group per one mol of the vinyl group), benzothiazole (0.036 mg) as a retarder and a solution of platinum-vinylsiloxane complex in xylene (9.71 x $10^{-5}$ mmol/mg) (137 mg, 0.133 x $10^{-4}$ mmol corresponding to 1 x $10^{-4}$ mol per one mol of the SiH group) were added. Further, toluene (0.1 ml) was added, and the mixture was stirred till a homogeneous soolution was obtained. Then, the solution was coated on a can lined with a polytetrafluoroethylene in a thin film and reacted at 150°C for 2 hours to obtain a rubbery cured material, which had a gel content of 63 % after toluene extraction.

Example 9

In the same manner as in Example 8 except that the polycarbosilane obtained in Example 6 (327 mg, 0.155 mol of the vinyl group), TDSB (13.1 mg, 0.155 mol of the SiH group corresponding to one mol of the SiH group per one mol of the vinyl group), benzothiazole (0.042 mg) as a retarder, a solution of platinum-vinylsiloxane complex in xylene (9.71 x $10^{-5}$ mmol/mg) (160 mg, 0.155 x $10^{-4}$ mmol corresponding to 1 x $10^{-4}$ mol per one mol of the SiH group) and toluene (0.1 ml) were used, the curing was carried out to obtain a rubbery cured material, which had a gel content of 65 %.

Example 10

In the same manner as in Example 8 except that the polycarbosilane obtained in Example 7 (304 mg, 0.164 mol of the vinyl group), TDSB (13.8 mg, 0.164 mol of the SiH group corresponding to one mol of the SiH group per one mol of the vinyl group), benzothiazole (0.044 mg) as a retarder, a solution of platinum-vinylsiloxane complex in xylene (9.71 x $10^{-5}$ mmol/mg) (177 mg, 0.164 x $10^{-4}$ mmol corresponding to 1 x $10^{-4}$ mol per one mol of the SiH group) and

toluene (0.11 ml) were used, the curing was carried out to obtain a cured material in a hard plastic state, which had. a gel content of 87 %.

The decomposition starting temperatures of the cured materials obtained in Examples 8-10 and Comparative Example 2 were measured under the same conditions as above. The results are shown in Table 4.

Table 4

| Cure material | Decomposition starting temperature (°C) | |
|---|---|---|
| | Uncured polymer | Cured material |
| Example 8 | 255 | 375 |
| Example 9 | 287 | 383 |
| Example 10 | 136 | 379 |
| Comp. Ex. 2 | 245 | 250 |

From the results in Table 4, it is understood that the decomposition starting temperature of the cured material of the present invention was much higher than the uncured polymer. In Comparative Example 2, the decomposition starting temperature of the cured material was not significantly increased, and the heat resistance after curing was not improved.

Synthetic Example 5

Preparation of 1,4-Bis(ethoxymethylphenylsilyl)benzene

In a 100 ml three-necked flask equipped with a magnetic stirrer, a dropping funnel and a refluxing condenser, magnesium (5.5 g, 0.23 mol), diethoxymethylphenylsilane (44.18 g, 0.21 mol) and THF (20 ml) were charged. Then, a solution of 1,4-dibromobenzene (23.59 g, 0.10 mol) dissolved in THF (25 ml) was dropwise added at room temperature under a nitrogen atmosphere. Since heat was vigorously generated during the addition, the solution was dropwise added over 2 hours while cooling the flask in a water bath to keep the mild heat generation. After the reaction mixture was kept standing at room temperature for 12 hours, since unreacted magnesium still remained, 1,4-dibromobenzene (12.9 g, 0.055 mol) was further added, followed by refluxing for 8 hours. After confirming the consumption of magnesium, the solvent was distilled off. The precipitated salt was separated by filtration, and washed with hexane. Again, the solvent was evaporated off under reduced pressure and the desired product was isolated as a colorless transparent liquid by Kugelrohr distillation. Boiling point: 185-200°C (bath temperature)/0.4 mmHg. Yielded amount: 20.73 g. Yield: 51 %.

MS m/e (%): 391 ($M^+$-15,000), 347(48)
$^1$H-NMR (δ, $CDCl_3$): 0.65 (s, $SiC\underline{H}_3$, 6H), 1.25 (t, $OCH_2C\underline{H}_3$, J = 7 Hz, 6H), 3.80 (q, $OC\underline{H}_2CH_3$, J = 7 Hz, 4H), 7.37-7.63 (m, aromatic, 14H).

Synthetic Example 6

Preparation of 1,4-Bis(methylphenylvinylsilyl)benzene

In a 100 ml two-necked round-bottom type flask equipped with a magnetic stirrer, a dropping funnel and a refluxing condenser, 1,4-bis(ethoxymethylphenylsilyl)benzene (5.0 g, 12.3 mol) and THF (20 ml) were charged. Then, a 1.0 M solution of vinylmagnesium bromide in toluene (27.1 ml) was dropwise added at room temperature over 45 minutes. No heat generation was observed during the reaction. The reaction mixture was heated while refluxing for 3 hours and then kept standing at room temperature for 16 hours. After addition of hexane, the product was hydrolyzed and the mixture was phase separated. The organic layer was washed with saturated saline and dried over anhydrous sodium sulfate. After the solvent was evaporated off under reduced pressure, the desired product was isolated as a colorless transparent liquid by Kugelrohr distillation. Boiling point: 180-220°C (bath temperature)/0.5 mmHg. Yielded amount: 2.98 g. Yield: 65.5 %.

MS m/e (%): 370 ($M^{+\prime}$ 6), 355 ($M^+$-15, 44), 147 (100)

$^1$H-NMR (δ, $CDCl_3$): 0.65 (s, $SiCH_3$, 6H), 5.81 (dd, vinyl, 2H), 6.21 (dd, vinyl, 2H), 6.49 (dd, vinyl, 2H), 7.37-7.57 (m, aromatic, 14H)
$^{13}$C-NMR (δ, $CDCl_3$): -4.18 ($Si\underline{C}H_3$), 127.90 (vinyl), 129.39 (vinyl), 134.16 (aromatic), 134.88 (aromatic), 135.03 (aromatic), 135.73 (aromatic).

Synthetic Example 7

Preparation of 1,4-Bis(chloromethylphenylsilyl)benzene

In a 100 ml two-necked round-bottom flask equipped with a magnetic stirrer and a refluxing condenser, 1,4-bis(ethoxymethylphenylsilyl)benzene (12.85 g, 0.03 mol) and benzoyl chloride (16.87 g, 0.12 mol) were charged. After heating the mixture at 60°C for 7 hours, a peak corresponding to the desired product was observed in gas chromatography, but the reaction rate was low. After the mixture was kept standing at room temperature for 12 hours, additional benzoyl chloride (16.42 g, 0.12 mol) was added, and heated at 100°C for 5 hours. After confirming the consumption of the starting material, excessive benzoyl chloride and by-produced ethyl benzoate were distilled off under reduced pressure, and the desired product was isolated as a colorless transparent liquid by Kugelrohr distillation. Boiling point: 190°C (bath temperature)/0.4 mmHg. Yielded amount: 8.97 g. Yield: 77.2 %.

MS m/e (%): 388 ($M^+$+2, 14), 386 ($M^{+'}$ 19.5), 371 (100)
$^1$H-NMR (δ, $CDCl_3$): 0.95 (s, $SiC\underline{H}_3$, 6H), 7.42-7.68 (m, aromatic, 14H).

Synthetic Example 8

Preparation of 1,4-Bis(methylphenylsilyl)benzene

In a 100 ml two-necked round-bottom flask equipped with a magnetic stirrer and a refluxing condenser, diethyl ether (10 ml) and then lithium aluminum hydride (197 mg, 5.2 mmol) were charged, and then a solution of 1,4-di(chloromethylphenylsilyl)benzene (4.20 g, 5.2 mol) in ether (10 ml) was dropwise added over 20 minutes. After the addition of the solution, the mixture was stirred at room temperature for 5 hours and kept standing at room temperature for 72 hours. After filtrating off excessive lithium aluminum hydride and the salt through Celite, the solvent was evaporated off. The precipitated salt was again filtrated off, and the desired product was isolated as a colorless transparent liquid by Kugelrohr distillation. Boiling point: 180°C (bath temperature)/0.5 mmHg. Yielded amount: 1.5 g. Yield: 63.5 %.

MS m/e (%): 318 ($M^{+'}$ 7.7), 317 ($M^+$-1, 4.8), 303 ($M^+$-15, 11), 197 (100)
$^1$H-NMR (δ, $CDCl_3$): 0.64 (d, $SiC\underline{H}_3$, J = 4 Hz, 6H), 4.95 (q, $Si\underline{H}$, J = 4 Hz, J($^{29}$Si-H) =195 Hz, 2H), 7.26-7.60 (m, aromatic, 14H)
$^{13}$C-NMR (δ, $CDCl_3$): -5.05 ($Si\underline{C}H_3$), 128.05 (aromatic), 129.64 (aromatic), 134.30 (aromatic), 134.89 (aromatic), 135.12 (aromatic), 136.88 (aromatic).
$^{29}$Si-NMR (δ, $CDCl_3$): -17.63.

Example 11

In a solution of 1,4-bis(methylphenylsilyl)benzene (1.76 g, 4.76 mmol) and a 1 wt. % solution of platinum-vinylsiloxane complex (6.24 x $10^{-4}$ mmol corresponding to 5 x $10^{-4}$ equivalent to the SiH group) in toluene (7.49 μl), which were dissolved in dried toluene (3 ml), a solution of 1,4-bis(methylphenylsilyl)benzene (1.01 g, 3.17 mmol) dissolved in dried toluene (3 ml) was dropwise added slowly at room temperature under a nitrogen atmosphere. Thereafter, the mixture was stirred at room temperature one day. An additional amount (7.49 μl) of the 1 wt. % solution of platinum-vinylsiloxane complex in toluene was added, and the mixture was stirred at room temperature one day. Volatile materials were evaporated off to obtain a crude polymer (2.21 g). Yield: 80 %.
According to the GPC measurement, the number average molecular weight was 1700 and the weight average molecular weight was 3700.
According to the $^1$H-NMR measurement, the obtained polymer was the silicon-containing reactive polymer having the structure of the formula:

Formula in No. 27
and the vinyl group content was 0.3 mmol/g.

The results of TGA of the silicon-containing reactive polymers obtained in Example 11 and Comparative

Example 1 are shown in Table 5.

Table 5

| Polymer | Weight loss (%) at | | $T_{d5}$ (°C)*1) |
|---|---|---|---|
| | 400°C | 500°C | |
| Example 11 | 1.3 | 14.6 | 455 |
| Comp. Ex. 1 | 10.2 | 98.4 | 366 |

Note: *1) $T_{d5}$: A temperature at which the weight loss is 5 %.

From the results in Table 5, it is understood that the silicon-containing reactive polymer of the present invention had much smaller weight loss and far better heat stability than the polymer of Comparative Example 1.

Example 12

To the mixture of the silicon-containing reactive polymer obtained in Example 11 (1.43 mg, the vinyl group content of 1.7 mmol) and $[MeSi(H)O]_4$ (LS-8600 manufactured by Shin-etsu Chemical Co., Ltd.) (100 mg, the SiH content of 1.7 mmol), a 1 wt. % THF solution of dimethyl maleate (7.22 mg) as a retardant and a 1 wt. % solution of a platinum-vinylsiloxane complex in xylene 1.72 mg ($1 \times 10^{-5}$ equivalent to the SiH group) were added. Then, toluene (2 ml) was added and the mixture was stirred till a homogeneous solution was formed. In a can lined by a polyimide film, the resulting solution was coated in a thin film and heated to cure it to obtain a cured material in a plastic state.

The decomposition starting temperatures of the cured materials of Example 1 and Comparative Example 2 are shown in Table 6.

Table 6

| Cure material | Decomposition starting temperature (°C) | |
|---|---|---|
| | Uncured polymer | Cured material |
| Example 12 | 193 | 280 |
| Comp. Ex. 2 | 245 | 250 |

From the results in Table 6, it is understood that the cured material of the present invention had much higher decomposition starting temperature than the uncured polymer. In Comparative Example 2, the decomposition starting temperature was not substantially increased and no improvement of the heat resistance was found.

**Claims**

**1.** A silicon-containing reactive polymer comprising, in its backbone, at least 30 % by weight of at least one structural unit selected from the group consisting of

$$-Si(R^1)(R^2)\text{-p-}C_6H_4\text{-}Si(R^1)(R^2)\text{-}CH_2CH_2\text{-} \quad (1)$$

$$-Si(R^1)(R^2)\text{-}CH_2CH_2\text{-}SiMe_2\text{-p-}C_6H_4\text{-}SiMe_2CH_2CH_2\text{-} \quad (2)$$

$$-Si(R^1)(R^2)\text{-m-}C_6H_4\text{-}Si(R^1)(R^2)\text{-}CH_2CH_2\text{-} \quad (3)$$

wherein $R^1$ and $R^2$ represent an organic group having 1 to 20 carbon atoms or a halogen atom, provided that $R^1$ and $R^2$ are different in the formulas (1) and (2) or are the same or different in the formula (3)
and having, as a terminal group, a vinylsilyl group of the formula (4):

$$CH_2{=}CR'\text{-}Si(R)_2\text{-} \quad (4)$$

wherein R is an organic group having 1 to 20 carbon atoms or a halogen atom, and R' is a hydrogen atom, a methyl group, a phenyl group or a trimethylsiloxy group.

**2.** A curable resin composition comprising (A) a silicon-containing reactive polymer as claimed in claim 1, (B) a silicon-containing compound having at least two SiH bonds in a molecule, and (C) a hydrosilylation catalyst.

**Patentansprüche**

**1.** Siliciumhaltiges, reaktives Polymeres, enthaltend in seinem Gerüst mindestens 30 Gew.-% mindestens einer Struktureinheit, die aus folgender Gruppe ausgewählt ist:

$$-Si(R^1)(R^2)\text{-p-}C_6H_4\text{-}Si(R^1)\ (R^2)\text{-}CH_2CH_2\text{-} \quad (1)$$

$$-Si(R^1)(R^2)\text{-}CH_2CH_2SiMe_2\text{-p-}C_6H_4\text{-}SiMe_2CH_2CH_2\text{-} \quad (2)$$

$$-Si(R^1)(R^2)\text{-m-}C_6H_4\text{-}Si(R^1)(R^2)\text{-}CH_2CH_2\text{-} \quad (3)$$

worin $R^1$ und $R^2$ jeweils einen organischen Rest mit 1 bis 20 Kohlenstoffatomen oder ein Halogenatom bedeuten, mit der Maßgabe, daß $R^1$ und $R^2$ in den Formeln (1) und (2) verschieden sind und in der Formel (3) gleich oder verschieden sind,
wobei das Polymere als terminale Gruppe eine Vinylsilylgruppe der Formel (4)

$$CH_2{=}CR'\text{-}Si(R)_2\text{-} \quad (4)$$

aufweist, worin R einen organischen Rest mit 1 bis 20 Kohlenstoffatomen oder ein Halogenatom bedeutet und R' ein Wasserstoffatom, eine Methylgruppe, eine Phenylgruppe oder eine Trimethylsiloxygruppe bedeutet.

**2.** Härtbare Harzzusammensetzung, enthaltend (A) ein siliciumhaltiges, reaktives Polymeres nach Anspruch 1, (B) eine siliciumhaltige Verbindung mit mindestens 2 SiH-Bindungen in einem Molekül und (C) einen Hydrosilylierungskatalysator.

**Revendications**

**1.** Un polymère réactif silicié comprenant, dans son squelette, au moins 30 % en poids d'au moins un motif structural choisi dans le groupe constitué par

$$-Si(R^1)(R^2)\text{-p-}C_6H_4\text{-}Si(R^1)(R^2)\text{-}CH_2CH_2\text{-} \quad (1)$$

$$-Si(R^1)(R^2)\text{-}CH_2CH_2\text{-}SiMe_2\text{-p-}C_6H_4\text{-}SiMe_2CH_2CH_2\text{-} \quad (2)$$

$$-Si(R^1)(R^2)\text{-m-}C_6H_4\text{-}Si(R^1)(R^2)\text{-}CH_2CH_2\text{-} \quad (3)$$

dans lesquelles $R^1$ et $R^2$ représentent un groupe organique ayant 1 à 20 atomes de carbone ou un atome d'halogène, étant entendu que $R^1$ et $R^2$ sont différents dans les formules (1) et (2) ou sont identiques ou différents dans la formule (3)
et ayant, en tant que groupe terminal, un groupe vinylsilyle de formule (4) :

$$CH_2{=}CR'\text{-}Si(R)_2\text{-} \quad (4)$$

dans laquelle R est un groupe organique ayant 1 à 20 atomes de carbone ou un atome d'halogène, et R' est un atome d'hydrogène, un groupe méthyle, un groupe phényle ou un groupe triméthylsiloxy.

**2.** Une composition de résine durcissable, comprenant (A) un polymère réactif silicié tel que revendiqué dans la revendication 1, (B) un composé silicié ayant au moins deux liaisons SiH dans une molécule et (C) un catalyseur d'hydrosilylation.